(19) Europäisches Patentamt
European Patent Office
Office européen des brevets

(11) **EP 2 910 897 B1**

(12) **EUROPEAN PATENT SPECIFICATION**

(45) Date of publication and mention
of the grant of the patent:
**20.03.2024 Bulletin 2024/12**

(21) Application number: **13848068.6**

(22) Date of filing: **02.10.2013**

(51) International Patent Classification (IPC):
**G06V 20/58** (2022.01)    **H04N 13/00** (2018.01)
**G06T 7/593** (2017.01)    **H04N 13/20** (2018.01)
**H04N 13/282** (2018.01)    **G08G 1/16** (2006.01)
**G06T 7/00** (2017.01)

(52) Cooperative Patent Classification (CPC):
**G08G 1/166; H04N 13/282; G06T 7/593;
G06T 7/97; G06V 20/58; H04N 13/20;**
G06T 2207/10012; H04N 2013/0081

(86) International application number:
**PCT/JP2013/076757**

(87) International publication number:
**WO 2014/061446 (24.04.2014 Gazette 2014/17)**

(54) **STEREO IMAGE PROCESSING DEVICE AND STEREO IMAGE PROCESSING METHOD**

STEREOBILDVERARBEITUNGSVORRICHTUNG UND
STEREOBILDVERARBEITUNGSVERFAHREN

DISPOSITIF DE TRAITEMENT D'IMAGES STÉRÉOSCOPIQUES ET PROCÉDÉ DE TRAITEMENT
D'IMAGES STÉRÉOSCOPIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.10.2012 JP 2012231501**

(43) Date of publication of application:
**26.08.2015 Bulletin 2015/35**

(73) Proprietor: **Hitachi Astemo, Ltd.
Hitachinaka-shi, Ibaraki 312-8503 (JP)**

(72) Inventor: **KAKEGAWA Shinji
Chiyoda-ku, Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(56) References cited:
**WO-A1-2009/101687      JP-A- H11 264 724
JP-A- 2006 318 062      JP-A- 2009 110 173
JP-A- 2010 097 561      JP-A- 2011 013 064**
**JP-A- 2011 525 657      US-A1- 2012 099 767**

• TUCAKOV V ET AL: "Temporally coherent stereo: improving performance through knowledge of motion", IEEE INTERNATIONAL CONFERENCE ON ROBOTICS AND AUTOMATION, vol. 3, 20 April 1997 (1997-04-20), pages 1999-2006, XP010235879, DOI: 10.1109/ROBOT.1997.619163 ISBN: 978-0-7803-3612-4
• FANG LIU ET AL: "Disparity Estimation in Stereo Sequences using Scene Flow", PROCEEDINGS OF THE BRITISH MACHINE VISION CONFERENCE 2009, 1 January 2009 (2009-01-01), pages 55.1-55.11, XP055311830, DOI: 10.5244/C.23.55 ISBN: 978-1-901725-39-1
• MINGLUN GONG: "Enforcing Temporal Consistency in Real-Time Stereo Estimation" In: A. LEONARDIS ET AL: "In Proceedings of the European Conference on Computer Vision (ECCV)", 1 January 2006 (2006-01-01), LECTURE NOTES IN COMPUTER SCIENCE;LNCS, SPRINGER, BERLIN, DE, PAGE(S) 564 - 577, XP019036518, ISBN: 978-3-540-33836-9 * section 3.6 *

**Description**

Technical Field

The present invention relates to a stereo image processing device and a stereo image processing method for, on the basis of a pair of images captured with a pair of imaging units, calculating parallax for an identical object contained in the images.

Background Art

Patent Literature 1 discloses an object detecting system including stereoimage taking means for outputting a reference image $T_O$ and a comparative image $T_C$, stereo matching means for performing a stereo matching process, object detecting means for detecting an object O in the reference image $T_O$, estimatedregion setting means for setting, in the reference image $T_O$ and the comparative image $T_C$, estimated regions $R_{Oest}$ and $R_{Cest}$ where images of the object O are expected to be taken in a current frame, on the basis of the distance Z of the object O in the reference image $T_O$ in the previous frame and the like, and determination means for, if the absolute value of the difference between the average luminance values $p1_{ij\_ave}$ and $p2_{ij\_ave}$ of the estimated regions is more than or equal to a predetermined threshold value $\Delta_{pth}$, correlating information about the object O detected in the estimated region $R_{Oest}$ of the reference image $T_O$ or information that the object O is not detected, with information that noise is included.

Citation List

Patent Literature

Patent Literature 1: JP 2009-110173 A
JP 2011-13064 A discloses a position detection apparatus which detects the position of an object. Said position detection apparatus includes image acquisition means that acquires stereo images, each stereo image comprising a pair of images, search means that uses one image of the pair of images as a reference image and the other image of the pair of images as a comparison image, and searches according to a search range for a matching area in the comparison image of a target area of the reference image, distance calculation means that calculates a distance of the object, and search range change means that changes the search range according to a predicted distance of the object.

Summary of Invention

Technical Problem

By the way, with respect to a stereo image processing device, which searches images captured with left and right cameras for similar image regions and performs matching therebetween to measure parallax for an identical object or the distance to the object, if there is a plurality of similar image regions other than the real matching regions in the search range, there is a possibility that the matching may fail, which can increase determination errors of parallax for an identical object (i.e., calculation errors of the distance).
Factors that regions other than the real matching regions are erroneously determined as similar regions include, for example, a factor that there is a plurality of similar image regions in the search range and a factor that noises of the left and right cameras (e.g., dirt sticking to the camera lenses or noises of the image signal processing circuit) that are at unequal levels are mixed.
If determination errors of parallax for an identical object are increased, problems, such as a decrease in the measurement accuracy of the distance and an increase of erroneous detection of obstacles, would occur.
The present invention has been made in view of the foregoing. It is an object of the present invention to provide a stereo image processing device and a stereo image processing method that can suppress a decrease in the determination accuracy of parallax for an identical object due to mixture of noise and the like.

Solution to Problem

To solve the problem, a stereo image processing device according to claim 1 is provided. A stereo image processing method according to claim 5 is also provided. Further preferred developments are in the dependent claims.

Advantageous Effects of Invention

According to the present invention, it is possible to, even when there is a plurality of similar image regions other than the real matching regions in the search range, suppress matching errors by adding information on the moving speed of the pair of imaging units, thereby improving the calculation accuracy of parallax for the identical object.

Brief Description of Drawings

Fig. 1 is a block diagram showing a stereo image processing device in accordance with an embodiment of the present invention.
Fig. 2 is a diagram for illustrating a method of calculating corresponding pixel positions in time series in accordance with an embodiment of the present invention.
Fig. 3 is a diagram for illustrating a method of predicting parallax in accordance with an embodiment of the present invention.
Fig. 4 is a diagram for illustrating a method of calculating similarity in accordance with an embodiment of the present invention.
Fig. 5 is a diagram for illustrating a process of weighting similarity in accordance with an embodiment of the present invention.
Fig. 6 is a diagram for illustrating triangulation in accordance with an embodiment of the present invention.

Description of Embodiments

Hereinafter, embodiments of the present invention will be described with reference to the drawings.
This embodiment will describe an exemplary driving assisting system that detects an object, such as a preceding vehicle, using a pair of images captured with a pair of imaging units that are mounted on a vehicle, as an example of a stereo image processing device and a stereo image processing method in accordance with the present invention.

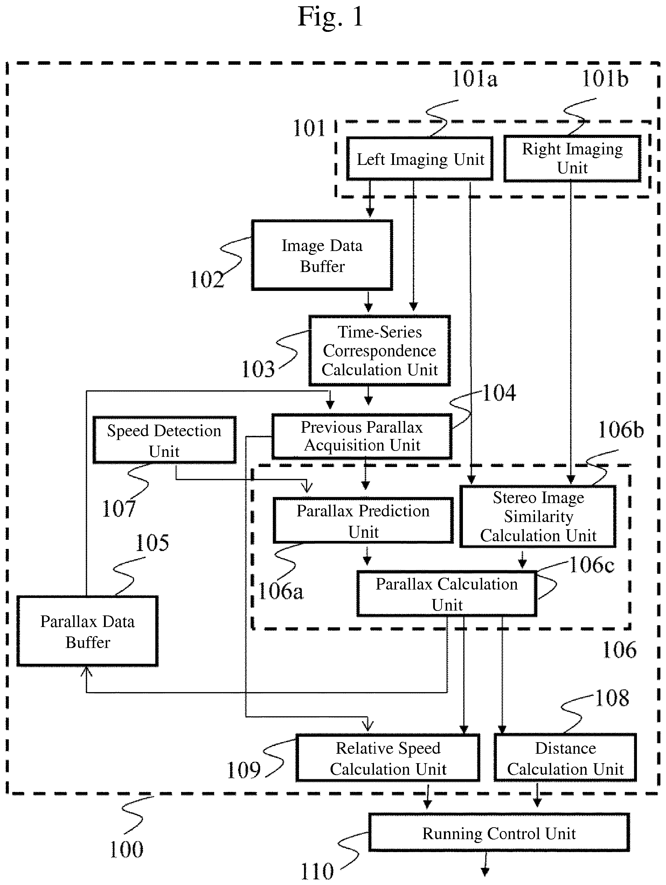

Fig. 1 is a block diagram showing the configuration of the aforementioned driving assisting system.
In Fig. 1, the driving assisting system includes a stereo image processing device 100 and a running control unit 110. The stereo image processing device 100 detects the relative distance to and the relative speed of an object (i.e., preceding vehicle) contained in the images through image processing, while the running control unit 110 performs vehicle running control, such as cruise control, on the basis of information on the relative distance and the relative speed.
Examples of the cruise control include accelerator control (i.e., throttle control), brake control, and the like that are performed on the basis of information on the relative speed of a preceding vehicle, the distance to the preceding vehicle, and the like so as to maintain a preset vehicle speed and distance between the vehicles.
It is also possible to provide a warning unit that issues warnings (i.e., calls attention) to a driver on the basis of information on the relative distance to and the relative speed of an object and the like instead of or together with the running control unit 110.
The stereo image processing device 100 includes an imaging device 101. The imaging device 101 includes a pair of imaging units (i.e., cameras) 101a and 101b that capture images of a region ahead of one's vehicle. The pair of imaging units 101a and 101b are installed on one's vehicle (e.g., on the inner side of the windshield) so as to capture images of a region ahead of the vehicle from positions where the imaging units are located apart from each other in the vehicle width direction.
The left imaging unit 101a, which is provided on the left side when facing a region ahead of the vehicle, outputs the captured left image, while the right imaging unit 101b, which is provided on the right side when facing a region ahead of the vehicle, outputs the captured right image.
The stereo image processing device 100 includes, in addition to the imaging device 101, an image data buffer unit 102, a time-series correspondence calculation unit 103, a previous parallax acquisition unit 104, a parallax data buffer unit 105, a stereo correspondence calculation unit 106, a speed detection unit 107, a distance calculation unit 108, and a relative speed calculation unit 109.
The image data buffer unit 102 has a function of holding the left image output from the left imaging unit 101a for a time corresponding to one frame, for example, and outputs the previous left image, which is a left image of the previous frame, in processing each frame.
The time-series correspondence calculation unit 103 receives the previous left image (i.e., previous frame) output from the image data buffer unit 102 and the current left image (i.e., current frame) output from the left imaging unit 101a, and calculates, for each pixel of the current left image, a pixel position on the previous left image that contains the same object region.

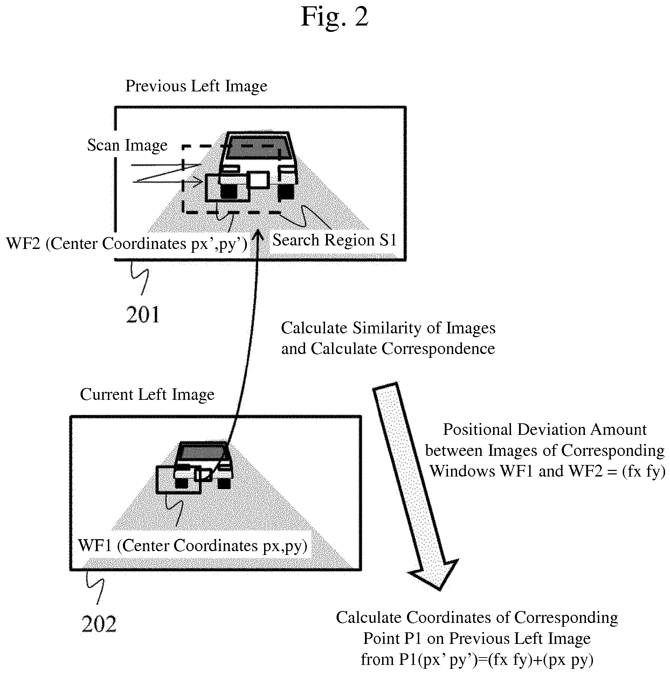

Hereinafter, a process of the time-series correspondence calculation unit 103 will be described with reference to Fig. 2.

The time-series correspondence calculation unit 103 receives a previous left image 201 output from the image data buffer unit 102 and a current left image 202 that is a left image currently input from the left imaging unit 101a.

Then, the time-series correspondence calculation unit 103 sets, for each pixel of the current left image 202, a window WF1 of a nearby region Np of $3 \times 3$ pixels or $9 \times 9$ pixels, for example, and similarly sets, for all pixels of a search region S1 on the previous left image 201, a window WF2 of a nearby region Np with the same shape as the window WF1, and then calculates the SAD value (Sum of Absolute Difference) for the window WF1 and the window WF2 in accordance with Formula 1.

Herein, the SAD value is an index value for evaluating the difference between the luminance values of the two images. If the SAD value is zero, it means that the two images (i.e., the previous left image 201 and the current left image 202) are identical. Instead of the SAD value, the SSD value (Sum of Squared Difference) can also be calculated.

[Formula 1]

$$SAD(P, F) = \sum_{Q \in Np} \left| I_{aft}(Q) - I_{pre}(Q + F) \right|$$

In Formula 1, symbol P represents the pixel position $[Px, Py]^T$ on the current left image 202 from which the SAD value is calculated, that is, the center coordinates of the window WF1; symbol F represents the positional deviation amount $[fx, fy]^T$ between the images of the window WF1 and the window WF2; symbol Q represents the pixel position in the nearby region Np that includes the pixel position $[Px, Py]^T$ at the center; symbol $I_{aft}(\ )$ represents the luminance value of the current left image 202 at the pixel position in the parentheses, and symbol $I_{pre}(\ )$ represents the luminance value of the previous left image 201 at the pixel position in the parentheses.

Next, the time-series correspondence calculation unit 103 determines the inverse number of the SAD value as an index value of image similarity, and calculates the pixel position P1 on the previous left image 201, from which the highest image similarity (i.e., minimum SAD value) has been calculated, as $[Px, Py]^T + [fx, fy]^T$.

That is, the time-series correspondence calculation unit 103 is adapted to search the previous left image 201 for the same pixel position as that in the current left image 202 through so-called template matching, and determines, by setting the window WF1 of the current left image 202 as the base image and moving the window WF2 in the search region S1 set on the previous left image 201, the similarity between the window WF1 and the window WF2 from the difference between the luminance values.

Then, regarding a combination of the window WF1 and the window WF2, for which the highest similarity has been determined, as a combination of the same object images, the time-series correspondence calculation unit 103 detects at which position on the previous left image 201 the object image contained in the current left image 202 is located, that is, movement of the object between the two adjacent frames.

Accordingly, it can be regarded that the pixel position P1 on the previous left image 201 corresponding to the pixel position $[Px, Py]^T$ on the current left image 202 is $[Px, Py]^T + [fx, fy]^T$, and the object imaged at the pixel position $[Px, Py]_T$ and the object imaged at the pixel position P1 = $[Px, Py]^T + [fx, fy]^T$ are the same.

When the time-series correspondence calculation unit 103 identifies a pixel on the previous left image 201 corresponding to each pixel of the current left image 202 as described above, information on the pixel is output to the previous parallax acquisition unit 104.

Meanwhile, the parallax data buffer unit 105 stores parallax data (i.e., parallax for an identical object) for each pixel of the previous left image 201 that has been measured from the previous frame.

The previous parallax acquisition unit 104, by referring to a table of parallax data on the previous frame on the basis of the pixel position P1 on the previous left image 201, that is, the deviation amount $[fx, fy]^T$ of the corresponding pixel position, acquires data on parallax (i.e., parallax in the past) determined from each pixel of the previous left image 201 corresponding to each pixel of the current left image 202, that is, data on parallax that has been previously detected for the identical object.

It should be noted that the pixel position P1 can be a subpixel position including a decimal part. Thus, when the table of parallax data on the previous frame is referred to, the decimal part of the pixel position P1 is round off to the nearest integer, for example.

The stereo correspondence calculation unit 106 includes a parallax prediction unit 106a, a stereo image similarity calculation unit 106b, and a parallax calculation unit 106c.

The parallax prediction unit 106a calculates, for each pixel of the current left image 202, predicted parallax $d_{fo}$ that is predicted to be measured from the current frame for an identical object in accordance with Formula 2, using parallax in the previous frame output from the previous parallax acquisition unit 104 and speed information on one's vehicle output from the speed detection unit 107.

In Formula 2, symbol f represents the focal length of the imaging units 101a and 101b, symbol c represents the pixel size of the imaging units 101a and 101b, symbol B represents the distance between the left and right cameras of the stereo imaging device 101, symbol $d_{pre}$ represents parallax in the previous frame, symbol z represents the speed of one's vehicle, and symbol dt represents the frame period.

[Formula 2]

$$d_{fo} = \frac{f \cdot c \cdot B}{f \cdot c \cdot B - z \cdot dt \cdot d_{pre}} d_{pre}$$

Formula 2 is a formula for predicting parallax by assuming that each pixel of the current left image 202 is a region on which a still object is projected.

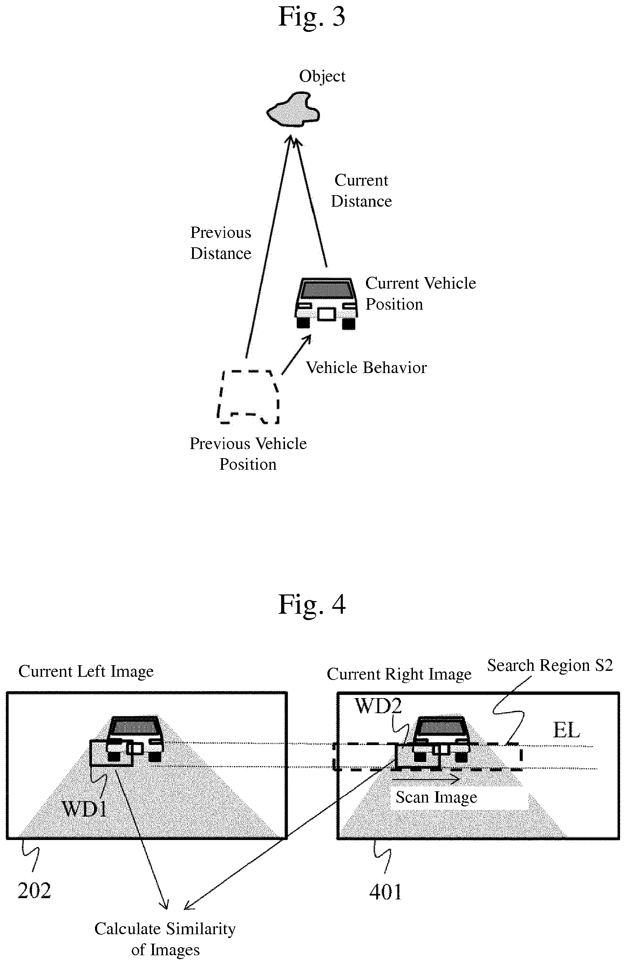

That is, as shown in Fig. 3, parallax in the previous frame corresponds to the previous distance to the object. Assuming that the object is still, the distance to the object becomes shorter than the previous value by the distance determined from the period from the previous time to the current time and the speed of one's vehicle, that is, the traveling distance of one's vehicle. Thus, parallax that is predicted to be measured from the current frame can be determined using the parallax in the previous frame and the speed of one's vehicle as variables.

As described above, the predicted parallax $d_{fo}$ determined in accordance with Formula 2 is a value that can be applied when an object is still. When the actual object is moving, greater errors will be generated as the relative speed of the object with respect to one's vehicle is higher. Thus, the parallax prediction unit 106a calculates an error of the predicted parallax $d_{fo}$ that is generated when the actual object is moving as a predicted variation $e_d$ in accordance with Formulae 3 and 4.

[Formula 3]

$$e_d = d_{foe} - d_{fo}$$

[Formula 4]

$$d_{foe} = \frac{f \cdot c \cdot B}{f \cdot c \cdot B - (z + z_{max}) \cdot dt \cdot d_{pre}} d_{pre}$$

In Formula 4, symbol $z_{max}$ represents a preset maximum speed in the direction opposite to the speed direction of one's vehicle. As $z_{max}$, the value of the estimated maximum speed of an oncoming vehicle, such as 100(km/h) or 150(km/h), for example, is set.

Parallax $d_{foe}$ calculated in Formula 4 is parallax that is predicted when an object, which moves at the preset maximum speed in the direction opposite to the speed direction of one's vehicle, is projected onto each pixel of the current left image 202.

That is, the predicted parallax $d_{fo}$ is the parallax that is predicted when an object is assumed to be stopping, while the predicted parallax $d_{foe}$ is the parallax that is predicted when an object is assumed to be approaching one's vehicle at the estimated maximum speed, that is, when the relative speed is assumed to be maximum.

When an object is approaching one's vehicle at the estimated maximum speed, a deviation between the predicted parallax $d_{fo}$, which has been determined by assuming that the object is stopping, and the actual parallax becomes maximum. Thus, the predicted variation $e_d$ is the maximum error estimated for the predicted parallax $d_{fo}$.

Meanwhile, the stereo image similarity calculation unit 106b calculates the image similarity between each pixel of the current left image 202 and a pixel, which can correspond thereto, of the current right image through a so-called stereo matching process.

Hereinafter, a process of calculating image similarity with the stereo image similarity calculation unit 106b will be described with reference to Fig. 4.

The stereo image similarity calculation unit 106b sets a left image window WD1 of a nearby region Np, such as 3 × 3 pixels or 9 × 9 pixels, for example, around each pixel of the current left image 202 as the center, and also sets a right image window WD2 with the same shape as the left image window WD1 in a search region S2 on the epipolar lines EL (i.e., search lines) in the current right image 401 that can correspond to the left image window WD1.

Then, the stereo image similarity calculation unit 106b calculates the SAD value (Sum of Absolute Difference) between the left image window WD1 and all right image windows WD2 in the search region S2 in accordance with Formula 5, and further calculates an inverse number of the SAD value as the image similarity.

[Formula 5]

$$SAD(P, D) = \sum_{Q \in Np} |I_L(Q) - I_r(Q - D)|$$

In Formula 5, symbol P represents the pixel position $[Px, Py]^T$ on the current left image 202 from which the SAD value is calculated; symbol D represents the positional deviation amount $[d, 0]^T$ (d represents parallax that is the difference of the x coordinates) between the images of the window WD1 and the window WD2; symbol Q represents the pixel position in the nearby region Np that includes the pixel position $[Px, Py]^T$ at the center; and symbol $I_L( )$ represents the luminance value of the current left image 202 at the pixel position in the parentheses, and $I_r( )$ represents the luminance value of the current right image 401 at the pixel position in the parentheses.

In order to calculate the image similarity between a given pixel p of the current left image 202 and all pixels, which can correspond thereto, of the current right image 401, the SAD value (i.e., image similarity) is calculated in accordance with Formula 5 for all possible ranges of the parallax d.

For example, the SAD value (i.e., image similarity) is calculated in accordance with Formula 5 by shifting the parallax d one by one in the range of d = 0 to 128, whereby 129 image similarities are obtained for each pixel. Such calculation of similarity is performed for all pixels of the current left image 202.

Herein, parallax that corresponds to the highest image similarity is determined as the parallax for an identical object. However, there is a possibility that image similarity of regions other than the real matching regions may become high due to the influence of noise. In such a case, parallax for an identical object may be erroneously determined.

Thus, in order to suppress the influence of noise, the parallax calculation unit 106c determines the parallax for an identical object as follows.

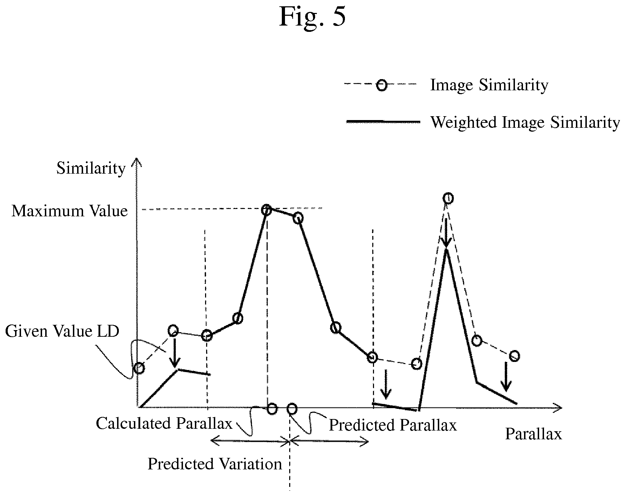

As shown in Fig. 5, the parallax calculation unit 106c weights the image similarity between each pixel of the current left image 202 and all pixels, which can correspond thereto, of the current right image 401, which has been calculated with the stereo image similarity calculation unit 106b, and detects parallax that indicates the highest similarity of all the weighted similarities as the parallax for an identical object.

According to such weighting, when the absolute value of the difference between the currently calculated parallax and the predicted parallax $d_{f0}$ calculated with the parallax prediction unit 106a is greater than the predicted variation $e_d$, correction is performed by lowering the image similarity by a given value LD, thereby lowering the weight assigned to the similarity that corresponds to the parallax having a deviation of more than the predicted variation $e_d$ relative to the predicted parallax $d_{f0}$.

Then, a process of determining parallax that corresponds to the highest corrected similarity (i.e., weighted image similarity) as the parallax for an identical object is performed for each pixel of the current left image 202.

That is, a predicted parallax range including the predicted parallax $d_{fo}$, which is interposed between the predicted parallax $d_{fo}$ + predicted variation $e_d$ and the predicted parallax $d_{fo}$ - predicted variation $e_d$, is set. When parallax is outside such predicted parallax range, it is assumed that there is a possibility that a plurality of similar image regions may be contained in the search range, or image similarity may have been erroneous calculated due to the influence of noise. Thus, correction of lowering the similarity is performed to lower the weight. Meanwhile, when parallax is within the predicted parallax range, it is assumed that the image similarity has been performed without the influence of noise. Thus, such image similarity is excluded from the target of correction of lowering the weight, so that the weight assigned thereto becomes relatively high.

Thus, instead of uniformly lowering the image similarity for parallax that is outside the predicted parallax range, it is also possible to uniformly increase the image similarity for parallax that is within the predicted parallax range. Meanwhile, it is also possible to uniformly increase the image similarity for parallax that is within the predicted parallax range while at the same time uniformly lowering the image similarity for parallax that is outside the predicted parallax range.

Further, any configuration is acceptable as long as the weight assigned to the image similarity is lowered as the absolute value of a deviation from the predicted parallax $d_{fo}$ becomes higher. Thus, the width (LD) of lowering the image similarity can be gradually increased with an increase in the absolute value of the deviation.

The predicted parallax $d_{fo}$ can be determined by assuming that an object is still as described above. However, even when the actual object is moving and moving at the maximum relative speed, the currently determined parallax is estimated to be within the range of $\pm$ predicted variation $e_d$.

Thus, when similarity for parallax that is outside the predicted parallax range is high, there is a possibility that a plurality of similar image regions may be contained in the search range, or there is influence of noise. Thus, the weight assigned to the similarity is lowered to suppress the possibility that the parallax that is outside the predicted parallax range may be detected as the parallax for an identical object (i.e., extracted as the highest similarity).

Accordingly, when a plurality of similar image regions is contained in the search range or when noises at unequal levels are mixed into a pair of images due to dirt sticking to the lenses of the imaging units 101a and 101b, superposition of noises on the image signals, and the like, it is possible to suppress erroneous determination of the parallax for an identical object, that is, erroneous determination of the distance to the object (i.e., preceding vehicle).

In the case of a vehicle driving assisting system in which the imaging units 101a and 101b are installed on the inner side of a windshield of a vehicle, dirt on the windshield may cause erroneous detection of parallax (i.e., distance). However, as described above, it is possible to, by lowering the weight that is assigned to the similarity for parallax having a predetermined deviation or more from the predicted value, suppress erroneous detection of the parallax for an identical object due to the influence of dirt on the windshield.

Thus, when cruise control of controlling the vehicle speed is performed, the distance to a preceding vehicle can be precisely controlled to a preset distance on the basis of the parallax for the identical object, that is, the distance to the object (i.e., preceding vehicle).

It should be noted that as described above, the predicted variation $e_d$ is not limited to the configuration in which the predicted variation $e_d$ is calculated as a deviation between the predicted parallax for when an object is assumed to be moving at the maximum relative speed and the predicted parallax for when an object is assumed to be stopping. In addition, it is also possible to set the predicted variation $e_d$ on the positive side and the predicted variation $e_d$ on the negative side to different values.

Further, it is also possible to set the predicted variation $e_d$ (i.e., predicted parallax range) not uniformly for all pixels but to a different value in accordance with the pixel position (i.e., image region).

When the predicted variation $e_d$ that differs in accordance with the pixel position (i.e., image region) is set, it is possible to set the predicted variation $e_d$ (i.e., predicted parallax range) that differs in accordance with the difference in the estimated maximum relative speed between, of the image region, a region in which an image of a preceding vehicle is contained and a region in which an image of an oncoming vehicle is contained.

It is also possible to set a predicted variation that varies in accordance with the road conditions, such as a speed limit, the presence or absence of a traffic jam, the road grade, or the radius of curvature of a road, or the running environment, such as the speed of one's vehicle (i.e., preset speed) or a preset distance between the vehicles.

When parallax for an identical object is calculated with the parallax calculation unit 106c as described above, data on the parallax is output to the parallax data buffer unit 105, the distance calculation unit 108, and the relative speed calculation unit 109.

Then, the parallax data buffer unit 105 stores the data on the parallax.

The distance calculation unit 108 converts the parallax calculated for each pixel of the current left image 202 into a distance in accordance with the principle of triangulation, and calculates, for each pixel of the current left image 202, the relative distance to an object that is contained in the corresponding pixel.

Meanwhile, the relative speed calculation unit 109 converts the parallax calculated for each pixel of the current left image 202 into a distance as with the distance calculation unit 108, and further converts the parallax in the corresponding previous frame acquired with the previous parallax acquisition unit 104 into a distance, and then calculates, for each pixel of the current left image 202, the relative distance to the object contained in the corresponding pixel by calculating the difference between the two distances.

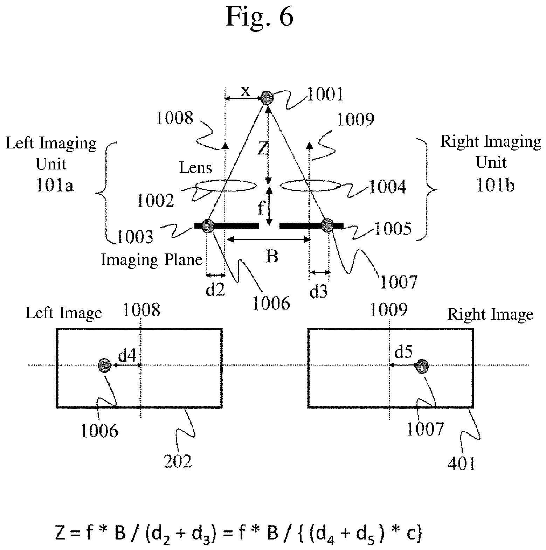

Herein, a method of calculating the relative distance will be described with reference to Fig. 6.

In Fig. 6, the left imaging unit 101a is a camera including a lens 1002 and an imaging plane 1003 and having a focal length f and an optical axis 1008. Similarly, the right imaging unit 101b is a camera including a lens 1004 and an imaging plane 1005 and having a focal length f and an optical axis 1009.

A point 1001 ahead of the camera is imaged as a point 1006 on the imaging plane 1003 of the left imaging unit 101a (at a distance of d2 from the optical axis 1008), and becomes the point 1006 on the left image 202 (at a pixel position of d4 from the optical axis 1008). Similarly, the point 1001 ahead of the camera is imaged as a point 1007 on the imaging plane 1005 of the right imaging unit 101b (at a distance of d3 from the optical axis 1009), and becomes the point 1007 on the right image 401 (at a pixel position of d5 from the optical axis 1009).

As described above, the point 1001 of an identical object is imaged at the pixel position of d4 on the left side of the optical axis 1008 on the left image 202, and is imaged at the pixel position of d5 on the right side of the optical axis 1009 on the right image 401. Thus, parallax corresponding to the pixels of d4+d5 (= parallax d determined by the parallax calculation unit 106c) is generated.

Therefore, the distance Z from the left and right imaging units 101a and 101b to the point 1001 can be determined as follows using the distance B between the optical axes of the left and right imaging units 101a and 101b.

That is, in Fig. 6, d2:f=x:D is established from the relationship between the point 1001 and the left imaging unit 101a, and d3:f=(B-x):D is established from the relationship between the point 1001 and the right imaging unit 101b. Thus, the distance Z can be calculated in accordance with the following formula:

$$Z=f\times B/(d2+d3)=f\times B/\{(d4+d5)\times c\}.$$

Herein, symbol c represents the size of the imaging element with the imaging plane 1003 or 1005.

As described above, the stereo image processing device 100 outputs information on the distance and the relative speed calculated for each pixel of an image, and the running control unit 110 detects an object (i.e., preceding vehicle) that exists ahead of one's vehicle on the basis of such information, and thus performs brake control and accelerator control in accordance with the relative distance to and the relative speed of the object.

The aforementioned stereo image processing device 100, when calculating the distance to a given region, calculates a predicted parallax value in advance using the distance to the region in the past (i.e., parallax for an identical object) and the speed information on the imaging device 101 (i.e., vehicle) from the past up to now, and weights the similarity in accordance with a deviation from the predicted value, and then performs matching to select the highest weighted similarity. Thus, even when a correct matching result is difficult to be obtained only with the image-based similarity information, for example, when there is a plurality of similar image regions other than the real matching regions in the search range, it is possible to perform correct matching and stably calculate the accurate distance.

Further, with respect to a far object, the number of pixels from which the distance to the object is calculated is smaller than that of a nearby object. Thus, if the distance is calculated erroneously for a part of the object, the proportion of the region of the erroneously measured distance to the entire object region becomes large. Thus, detection of the object is difficult to perform. However, as the aforementioned stereo image processing device 100 can suppress erroneous calculation of the distance, an advantageous effect is provided in that a far object can be easily detected.

In the aforementioned embodiment, the image data buffer unit 102 and the time-series correspondence calculation unit 103 each perform a process only on the left image input from the left imaging unit 101a, and do not perform a process on the right image input from the right imaging unit 101b, so that the left image is used as a reference. However, the present invention is not limited to such a configuration.

For example, similar advantageous effects can be provided even when the left imaging unit 101a and the right imaging unit 101b in Fig. 1 are switched and all of the relationships between the left image and the right image are thus switched. Alternatively, the entire configuration of Fig. 1 may be made symmetrical by configuring each of the image data buffer unit 102 and the time-series correspondence calculation unit 103 to perform a process not only on one of the right or left image but on both the left and right images.

Further, it is also possible to calculate a predicted parallax value for an identical object on the basis of the speed and acceleration of the imaging device 101 (i.e., vehicle).

Reference Signs List

| | |
|---|---|
| 100 | Stereo image processing device |
| 101 | Imaging device |
| 101a | Left imaging unit |
| 101b | Right imaging unit |
| 102 | Image data buffer unit |
| 103 | Time-series correspondence calculation unit |
| 104 | Previous parallax acquisition unit |
| 105 | Parallax data buffer unit |
| 106 | Stereo correspondence calculation unit |
| 106a | Parallax prediction unit |
| 106b | Stereo image similarity calculation unit |
| 106c | Parallax calculation unit |
| 107 | Speed detection unit |
| 108 | Distance calculation unit |
| 109 | Relative speed calculation unit |
| 110 | Running control unit |

**Claims**

**1.** A stereo image processing device comprising:

a pair of imaging units (101a, 101b);
a similarity calculation unit (106b) configured to receive a pair of images captured with the pair of imaging units (101a, 101b) and calculate similarity for each parallax of the pair of images;
a parallax calculation unit (106c) configured to calculate parallax for an identical object on the basis of the similarity for each parallax;
a parallax data buffer unit (105) configured to store data on the parallax calculated with the parallax calculation unit (106c);
a speed detection unit (107) configured to detect a moving speed of the pair of imaging units (101a, 101b); and
a parallax prediction unit (106a) configured to calculate a predicted parallax value (dfo) on the basis of the moving speed and past data on parallax stored in the parallax data buffer unit (105) and to calculate a predicted variation (ed) of the predicted parallax value (dfo),
wherein the parallax calculation unit (106c) is configured to calculate parallax for an identical object on the basis of the similarity for each parallax and the predicted parallax value (dfo), wherein
the pair of imaging units (101a, 101b) are mounted on a vehicle, and the speed detection unit (107) is configured to detect a traveling speed of the vehicle as the moving speed,
wherein
the parallax calculation unit (106c) is configured to weight the similarity for each parallax on the basis of the predicted parallax value (dfo), and when an absolute value of a difference between the parallax calculated with the parallax calculation unit (106c) and the predicted parallax value (dfo) exceeds the predicted variation (ed), to perform correction by lowering a weight assigned to the similarity corresponding to the parallax having a deviation exceeding the predicted variation (ed) relative to the predicted parallax value (dfo), and wherein
the parallax calculation unit (106c) is configured to determine parallax corresponding to the highest weighted similarity as parallax for an identical object contained in the images.

2. The stereo image processing device according to claim 1,
wherein the parallax calculation unit (106c) is configured to weight the similarity in accordance with the deviation of parallax from the predicted parallax value (dfo).

3. The stereo image processing device according to claim 1, further comprising:
a distance calculation unit (108) configured to, on the basis of parallax for an identical object calculated with the parallax calculation unit (106c), calculate a distance to the object and output the distance.

4. The stereo image processing device according to claim 1, further comprising:
a relative speed calculation unit (109) configured to, on the basis of parallax for an identical object calculated with the parallax calculation unit (106c), calculate a relative speed of the object and output the relative speed.

5. A stereo image processing method, comprising:

calculating, with a similarity calculation unit (106b), similarity for each parallax for a pair of images captured with a pair of imaging units (101a, 101b);
calculating, with a parallax prediction unit (106a), a predicted parallax value (dfo) on the basis of past data on parallax for an identical object and a moving speed of the pair of imaging units (101a, 101b);
calculating, with the parallax prediction unit (106a), a predicted variation (ed) of the predicted parallax value (dfo); wherein
the pair of imaging units (101a, 101b) are mounted on a vehicle, and a speed detection unit (107) is configured to detect a traveling speed of the vehicle as the moving speed, and
calculating, with a parallax calculation unit (106c), parallax for the identical object on the basis of the similarity for each parallax and the predicted parallax value (dfo), wherein
the similarity for each parallax is weighted on the basis of the predicted parallax value (dfo), and when an absolute value of a difference between the parallax calculated with the parallax calculation unit (106c) and the predicted parallax value (dfo) exceeds the predicted variation (ed), correction is performed lowering a weight assigned to the similarity corresponding to the parallax having a deviation exceeding the predicted variation (ed) relative to the predicted parallax value (dfo), and wherein
a parallax corresponding to the highest weighted similarity is determined as parallax for an identical object contained in the images.

6. The stereo image processing method according to claim 5, further comprising:

setting a predicted parallax range including the predicted parallax value (dfo);
assigning a low weight to similarity corresponding to parallax that is outside the predicted parallax range; and
determining parallax corresponding to the highest similarity of the weighted similarity for each parallax, as parallax for an identical object.

## Patentansprüche

1. Stereobildverarbeitungsvorrichtung, die umfasst:

ein Paar Bildgebungseinheiten (101a, 101b);
eine Ähnlichkeitsberechnungseinheit (106b), die konfiguriert ist, ein Paar Bilder zu empfangen, die mit dem Paar Bildgebungseinheiten (101a, 101b) aufgenommen werden, und eine Ähnlichkeit für jede Parallaxe der beiden Bilder zu berechnen;
eine Parallaxenberechnungseinheit (106c), die konfiguriert ist, eine Parallaxe für ein identisches Objekt anhand der Ähnlichkeit für jede Parallaxe zu berechnen;
eine Parallaxendaten-Zwischenspeichereinheit (105), die konfiguriert ist, Daten über die Parallaxe, die mit der Parallaxenberechnungseinheit (106c) berechnet werden, zu speichern; und
eine Geschwindigkeitsdetektionseinheit (107), die konfiguriert ist, eine Bewegungsgeschwindigkeit der beiden Bildgebungseinheiten (101a, 101b) zu detektieren; und
eine Parallaxenvorhersageeinheit (106a), die konfiguriert ist, einen vorhergesagten Parallaxenwert (dfo) anhand der Bewegungsgeschwindigkeit und vergangener Daten über eine Parallaxe, die in der Parallaxendaten-Zwischenspeichereinheit (105) gespeichert sind, zu berechnen und eine vorhergesagte Variation (ed) des vorhergesagten Parallaxenwerts (dfo) zu berechnen,
wobei die Parallaxenberechnungseinheit (106c) konfiguriert ist, eine Parallaxe für ein identisches Objekt anhand der Ähnlichkeit für jede Parallaxe und des vorhergesagten Parallaxenwerts (dfo) zu berechnen, wobei
die beiden Bildgebungseinheiten (101a, 101) auf einem Fahrzeug angebracht ist und die Geschwindigkeitsdetektionseinheit (107) konfiguriert ist, eine Fahrgeschwindigkeit des Fahrzeugs als die Bewegungsgeschwindigkeit zu detektieren,
wobei
die Parallaxenberechnungseinheit (106c) konfiguriert ist, die Ähnlichkeit für jede Parallaxe anhand des vorhergesagten Parallaxenwerts (dfo) zu gewichten und dann, wenn ein absoluter Wert eines Unterschieds zwischen der Parallaxe, die mit der Parallaxenberechnungseinheit (106c) berechnet wird, und dem vorhergesagten Parallaxenwert (dfo) die vorhergesagte Variation (ed) überschreitet, eine Korrektur durch Senken einer Gewichtung, die der Ähnlichkeit zugewiesen ist, die der Parallaxe mit einer Abweichung, die die vorhergesagte Variation (ed) überschreitet, entspricht, in Bezug auf den vorhergesagten Parallaxenwert (dfo) auszuführen, und wobei die Parallaxenberechnungseinheit (106c) konfiguriert ist, eine Parallaxe, die der höchsten gewichteten Ähnlichkeit entspricht, als Parallaxe für ein identisches Objekt, das in den Bildern enthalten ist, zu bestimmen.

2. Stereobildverarbeitungsvorrichtung nach Anspruch 1,
wobei die Parallaxenberechnungseinheit (106c) konfiguriert ist, die Ähnlichkeit in Übereinstimmung mit der Abweichung einer Parallaxe von dem vorhergesagten Parallaxenwert (dfo) zu gewichten.

3. Stereobildverarbeitungsvorrichtung nach Anspruch 1, die ferner umfasst:
eine Abstandsberechnungseinheit (108), die konfiguriert ist, anhand einer Parallaxe für ein identisches Objekt, die mit der Parallaxenberechnungseinheit (106c) berechnet wird, einen Abstand zu dem Objekt zu berechnen und den Abstand auszugeben.

4. Stereobildverarbeitungsvorrichtung nach Anspruch 1, die ferner umfasst:
eine Einheit zur Berechnung einer relativen Geschwindigkeit (109), die konfiguriert ist, anhand einer Parallaxe für ein identisches Objekt, die mit der Parallaxenberechnungseinheit (106c) berechnet wird, eine relative Geschwindigkeit des Objekts zu berechnen und die relative Geschwindigkeit auszugeben.

5. Stereobildverarbeitungsverfahren, das umfasst:

Berechnen mit einer Ähnlichkeitsberechnungseinheit (106b) einer Ähnlichkeit für jede Parallaxe für ein Paar Bilder, die mit einem Paar Bildgebungseinheiten (101a, 101b) aufgenommen werden;
Berechnen mit einer Parallaxenvorhersageeinheit (106a) eines vorhergesagten Parallaxenwerts (dfo) anhand vergangener Daten über eine Parallaxe für ein identisches Objekt und eine Bewegungsgeschwindigkeit der beiden Bildgebungseinheiten (101a, 101b);

Berechnen mit der Parallaxenvorhersageeinheit (106a) einer vorhergesagten Variation (ed) des vorhergesagten Parallaxenwerts (dfo);

wobei die beiden Bildgebungseinheiten (101a, 101b) an einem Fahrzeug angebracht ist und eine Geschwindigkeitsdetektionseinheit (107) konfiguriert ist, eine Fahrgeschwindigkeit des Fahrzeugs als die Bewegungsgeschwindigkeit zu detektieren, und

Berechnen mit einer Parallaxenberechnungseinheit (106c) einer Parallaxe für das identische Objekt anhand der Ähnlichkeit für jede Parallaxe und des vorhergesagten Parallaxenwerts (dfo), wobei

die Ähnlichkeit für jede Parallaxe anhand des vorhegesagten Parallaxenwerts (dfo) gewichtet wird,

und dann, wenn ein absoluter Wert eines Unterschieds zwischen der Parallaxe, die mit der Parallaxenberechnungseinheit (106c) berechnet wird, und dem vorhergesagten Parallaxenwert (dfo) die vorhergesagte Variation (ed) überschreitet, eine Korrektur ausgeführt wird, die eine Gewichtung, die der Ähnlichkeit zugewiesen ist, die der Parallaxe mit einer Abweichung, die die vorhergesagte Variation (ed) überschreitet, entspricht, relativ zu dem vorhergesagten Parallaxenwert (dfo) senkt, und wobei

eine Parallaxe, die der höchsten gewichteten Ähnlichkeit entspricht, als Parallaxe für ein identisches Objekt, das in den Bildern enthalten ist, bestimmt wird.

6. Stereobilderarbeitungsverfahren nach Anspruch 5, das ferner umfasst:

Einstellen eines Bereichs vorhergesagter Parallaxen, der den vorhergesagten Parallaxenwert (dfo) enthält;

Zuweisen einer geringen Gewichtung zu einer Ähnlichkeit, die einer Parallaxe entspricht, die außerhalb des Bereichs vorhergesagter Parallaxen liegt; und

Bestimmen einer Parallaxe, die der höchsten Ähnlichkeit der gewichteten Ähnlichkeit für jede Parallaxe entspricht, als Parallaxe für ein identisches Objekt.

## Revendications

1. Dispositif de traitement d'images stéréoscopiques comprenant :

une paire d'unités d'imagerie (101a, 101b) ;

une unité de calcul de similarité (106b) configurée pour recevoir une paire d'images capturées avec la paire d'unités d'imagerie (101a, 101b) et pour calculer une similarité pour chaque parallaxe de la paire d'images ;

une unité de calcul de parallaxe (106c) configurée pour calculer une parallaxe pour un objet identique sur la base de la similarité pour chaque parallaxe ;

une unité tampon de données de parallaxe (105) configurée pour stocker des données sur la parallaxe calculée avec l'unité de calcul de parallaxe (106c) ;

une unité de détection de vitesse (107) configurée pour détecter une vitesse de déplacement de la paire d'unités d'imagerie (101a, 101b) ; et

une unité de prédiction de parallaxe (106a) configurée pour calculer une valeur de parallaxe prédite (dfo) sur la base de la vitesse de déplacement et de données passées sur une parallaxe stockée dans l'unité tampon de données de parallaxe (105) et pour calculer une variation prédite (ed) de la valeur de parallaxe prédite (dfo),

dans lequel l'unité de calcul de parallaxe (106c) est configurée pour calculer une parallaxe pour un objet identique sur la base de la similarité pour chaque parallaxe et de la valeur de parallaxe prédite (dfo), dans lequel

la paire d'unités d'imagerie (101a, 101b) est montée sur un véhicule, et l'unité de détection de vitesse (107) est configurée pour détecter une vitesse de circulation du véhicule à titre de vitesse de déplacement,

dans lequel

l'unité de calcul de parallaxe (106c) est configurée pour pondérer la similarité pour chaque parallaxe sur la base de la valeur de parallaxe prédite (dfo), et quand une valeur absolue d'une différence entre la parallaxe calculée avec l'unité de calcul de parallaxe (106c) et la valeur de parallaxe prédite (dfo) dépasse la variation prédite (ed), pour effectuer une correction en abaissant une pondération attribuée à la similarité correspondant à la parallaxe ayant une déviation dépassant la variation prédite (ed) relativement à la valeur de parallaxe prédite (dfo), et dans lequel

l'unité de calcul de parallaxe (106c) est configurée pour déterminer une parallaxe correspondant à la similarité pondérée la plus élevée à titre de parallaxe pour un objet identique contenu dans les images.

2. Dispositif de traitement d'images stéréoscopiques selon la revendication 1,

dans lequel l'unité de calcul de parallaxe (106c) est configurée pour pondérer la similarité conformément à la déviation de parallaxe par rapport à la valeur de parallaxe prédite (dfo).

3. Dispositif de traitement d'images stéréoscopiques selon la revendication 1, comprenant en outre :
une unité de calcul de distance (108) configurée pour, sur la base d'une parallaxe pour un objet identique calculée avec l'unité de calcul de parallaxe (106c), calculer une distance jusqu'à l'objet et sortir la distance.

4. Dispositif de traitement d'images stéréoscopiques selon la revendication 1, comprenant en outre :
une unité de calcul de vitesse relative (109) configurée pour, sur la base d'une parallaxe pour un objet identique calculée avec l'unité de calcul de parallaxe (106c), calculer une vitesse relative de l'objet et sortir la vitesse relative.

5. Procédé de traitement d'images stéréoscopiques, comprenant les étapes consistant à :

calculer, avec une unité de calcul de similarité (106b), une similarité pour chaque parallaxe pour une paire d'images capturées avec une paire d'unités d'imagerie (101a, 101b) ;
calculer, avec une unité de prédiction de parallaxe (106a), une valeur de parallaxe prédite (dfo) sur la base de données passées sur une parallaxe pour un objet identique et d'une vitesse de déplacement de la paire d'unités d'imagerie (101a, 101b) ;
calculer, avec l'unité de prédiction de parallaxe (106a), une variation prédite (ed) de la valeur de parallaxe prédite (dfo) ;
dans lequel
la paire d'unités d'imagerie (101a, 101b) est montée sur un véhicule et une unité de détection de vitesse (107) est configurée pour détecter une vitesse de circulation du véhicule à titre de vitesse de déplacement, et
calculer, avec une unité de calcul de parallaxe (106c), une parallaxe pour l'objet identique sur la base de la similarité pour chaque parallaxe et de la valeur de parallaxe prédite (dfo), dans lequel
la similarité pour chaque parallaxe est pondérée sur la base de la valeur de parallaxe prédite (dfo),
et quand une valeur absolue d'une différence entre la parallaxe calculée avec l'unité de calcul de parallaxe (106c) et la valeur de parallaxe prédite (dfo) dépasse la variation prédite (ed), une correction est effectuée en abaissant une pondération attribuée à la similarité correspondant à la parallaxe ayant une déviation dépassant la variation prédite (ed) relativement à la valeur de parallaxe prédite (dfo), et dans lequel
une parallaxe correspondant à la similarité pondérée la plus élevée est déterminée à titre de parallaxe pour un objet identique contenu dans les images.

6. Procédé de traitement d'images stéréoscopiques selon la revendication 5, comprenant en outre les étapes consistant à :

fixer une plage de parallaxe prédite incluant la valeur de parallaxe prédite (dfo) ;
attribuer une pondération faible à une similarité correspondant à une parallaxe qui est en dehors de la plage de parallaxe prédite ; et
déterminer une parallaxe correspondant à la similarité la plus élevée de la similarité pondérée pour chaque parallaxe, à titre de parallaxe pour un objet identique.

# Fig. 1

# Fig. 2

Previous Left Image

Scan Image

WF2 (Center Coordinates px',py')   Search Region S1

201

Calculate Similarity of Images
and Calculate Correspondence

Current Left Image

WF1 (Center Coordinates px,py)

202

Positional Deviation Amount
between Images of Corresponding
Windows WF1 and WF2 = (fx fy)

Calculate Coordinates of Corresponding
Point P1 on Previous Left Image
from P1(px' py')=(fx fy)+(px py)

# Fig. 3

Object

Current
Distance

Previous
Distance

Current Vehicle
Position

Vehicle Behavior

Previous Vehicle
Position

# Fig. 4

Current Left Image

Current Right Image    Search Region S2

WD2

EL

Scan Image

WD1

202

401

Calculate Similarity
of Images

# Fig. 5

# Fig. 6

$$Z = f * B / (d_2 + d_3) = f * B / \{ (d_4 + d_5) * c\}$$

**EP 2 910 897 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009110173 A

- JP 2011013064 A